# EUROPEAN PATENT APPLICATION

(11) **EP 1 339 147 A1**
(43) Date of publication of application: **27.08.2003**
(21) Application number: 02425749.5
(22) Date of filing: 06.12.2002
(51) Int. Cl.: H02G 1/08, G02B 6/44

(54) **Cable recovery and replacement system, for example an optical fibre cable laid within a guide pipe, by means of a pressurized hydraulic fluid**

(30) Priority: 20.02.2002 IT RM20020092
(71) Applicant: FIBOT HOLDING LTD., Pieta'MSD - Malta (MT)
(72) Inventor: Bernardini, Giuseppe, 00128 Roma (IT)
(74) Representative: Iannone, Carlo Luigi

(57) **Abstract**

The invention relates to a recovery and replacement system for a cable laid within a guide tube, characterised in that it comprises the following operations:
- ensuring the sealing from a machine generating a hydraulic fluid up to the guide tube;
- generating a flow of a hydraulic pressurised fluid within the guide tube containing the cable to be recovered, feeding said fluid through one end of the guide tube;
- pulling the cable to be recovered from the other end of the guide tube, up to its complete extraction.

## Description

The present invention concerns a cable recovery and replacement system, for example an optical fibre cable laid within a guide tube, by means of a pressurised hydraulic fluid.

As it is well known, phone user cables, particularly optical fibre cables, are laid within tubes comprising the infrastructure of the whole phone network.

Cable network extends both in the urban area and in the extra - urban area and cover all the national and international territory.

This network has been enlarged in the last thirty year period, when the optical fibre cables have been used as physical support and it is continuously updated to satisfy the growing needing of the new connections.

During the last years, laying of cables within tubes of the infrastructure has been automated by employing systems exploiting pressurised hydraulic fluids, thus avoiding long and laborious laying work by manual introduction of the cables. For reference to this technique, see the Italian Patent N° 1,244,964, filed in the name of C.I.S. Sud, and the following improvements to the same, patented and filed as Italian Utility Model Applications N° 227,223, always in the name of C.I.S. Sud, N° RM2002U000044 and N° RM2001U000119, in the name of Fibot Holding.

On the other hand, said systems are very efficient and make it possible, in a single solution, laying cables much more longer than those installed by the traditional techniques, and a consequence, limits of the cables presently installed by this technology, about 4 kilometres, are due to manufacturing requirements of the cable, and not to limits imposed by the laying technology.

During the years, always more felt is the needing of maintenance of this network.

In fact, an optical fibre cable can fail either for damages caused from outside, i.e. for works that could interfere with the network during their carrying out, and for internal reasons, due to the collapse of the fibres, caused by stresses and/or chemical degradation processes.

In a connection, even when also only one fibre does no more work, cable containing the same must be replaced for all its manufacture length.

Recovery operation of the laid cable is now quite recurrent, both due to the extension of the network and due to the duration of the use time of some parts of the same.

This operation, that is rather new in the installation activity, is particularly long and laborious for the length of the sizes of the cable to be recovered.

Usually, it is carried out manually, with following intervention for withdrawal of the whole size.

On the other hand, time necessary to carry out the operation must be as shortest as possible, since disservice generates a so-called "lack of earning", which nowadays is relevant.

Thus basic problem is that of drastically reducing intervention time, with normal conditions of the infrastructure.

According to the present invention, it has been thought to use a hydraulic pressurised fluid for the recovery of the cable, i.e. the same hydraulic fluid usually used for laying the cables.

The solution according to the invention is particularly advantageous mainly in the embodiment providing the simultaneous replacement with a new cable.

The present invention will be now described, for illustrative but not limitative purposes, according to its preferred embodiments, with particular reference to the figures of the enclosed drawings, wherein:
figure 1 shows an operation scheme of the system according to a first embodiment,
figure 2 shows an operation scheme of the system according to a second embodiment,
figure 3shows a particular relevant to the joining of two optical fibre cables for the replacement operation.

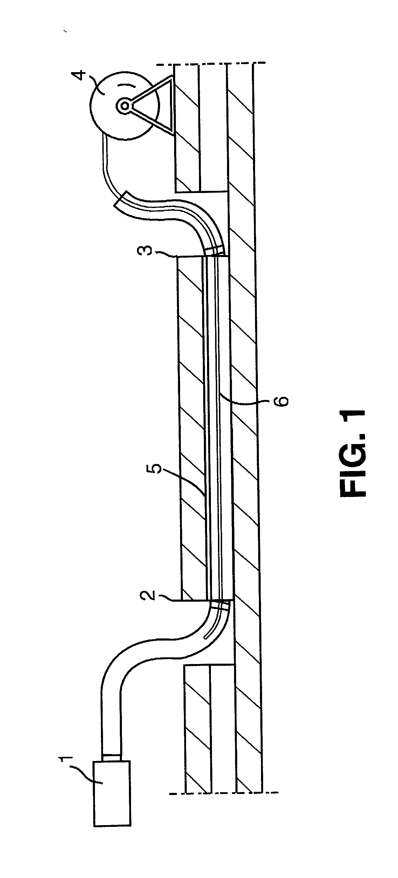

Making reference to figure 1, it is shown a device 1, able to generate a suitable stream of hydraulic pressurised fluid, said device being also a laying device for a cable by hydraulic pressurised fluid according the known technique, and being placed on a side 2 of the guide tube containing the cable to be recovered, the cable being withdrawn from the other side 3 and continuously recovered on a rotating reel 4.

Hydraulic pressurised fluid is introduced within the guide tube 5 containing the cable 6, which is subjected to a distributed thrust effect along the surface and a concentrated effect, from side 2, bringing it to exit from the tube, from the opposite side 3.

From the side 3, the cable is recovered by a little pulling action of the same rotating reel 4, the motion of the reel being manual or powered.

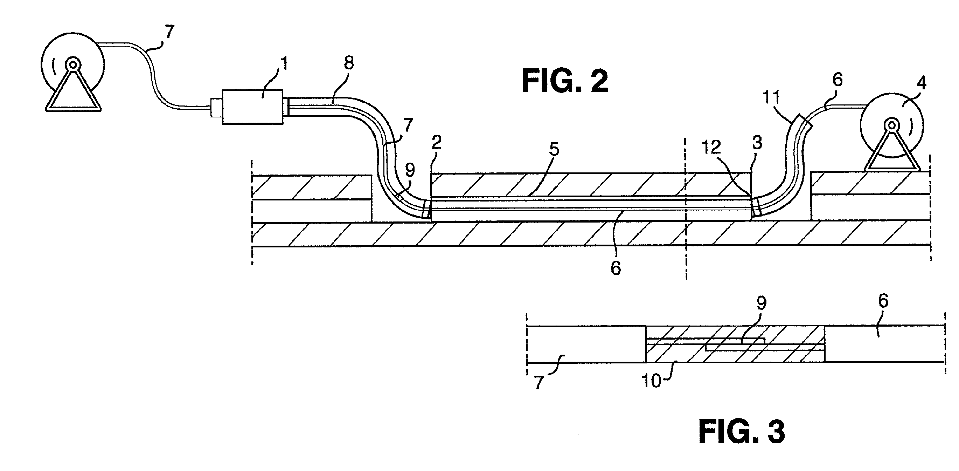

Making reference to figure 2, it is shown the device according to a second embodiment of the system according to the present invention, allowing to simultaneously realise the recovery of the failed cable 6 and to lay the new cable 7 within the same guide tube 5.

This operation is carried out first introducing the cable 7 to be laid in the machine 1, making the cable 7 exiting from the same for a length bigger than the distance between the machine an the end close to the guide tube, side 2, of the pipeline end.

Then, the machine seal connection support tube 8 is introduced in the guide tube and the end of the support tube is connected with the machine 1; then the end of the cable 7 to be laid is joined, with the head of the cable 6 to be recovered, said end exiting from the other end of the support tube 8.

Joint 9 of the heads of the two cables must be a quick joint and the restoring 10 of the joint zone must be at most of the same size of the outer surface of the cables.

Then the cable to be laid is pulled backward until the support tube 8 can be connected with the end of the guide tube 5.

The other end of the guide tube, side 3, is connected with a provisional support tube 11, having a length such to exit from the room 12 to spread the hydraulic fluid outside the same.

Hydraulic pressurised fluid is sent from the device 1 for the time necessary to have it exiting from the end far from the support tube, by a full section flow motion.

When the old cable floats, the combined recovery and laying operation can be started.

While the old cable is withdrawn, it is recovered about the rotating reel 4, the operation ends when the new cable 7 exits from the end of the guide tube, side 3, with a length necessary for the joining of the following contiguous size.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Recovery and replacement system for a cable laid within a guide tube, **characterised in that** it comprises the following operations:
- ensuring the sealing from a machine generating a hydraulic fluid up to the guide tube;
- generating a flow of a hydraulic pressurised fluid within the guide tube containing the cable to be recovered, feeding said fluid through one end of the guide tube;
- pulling the cable to be recovered from the other end of the guide tube, up to its complete extraction.

2. Cable recovery and replacement system according to claim 1, **characterised in that** it further comprises the following operation, carried out simultaneously to the pulling operation:
- recovering the cable to be recovered about a recovery reel.

3. Cable recovery and replacement system according to one of the claims 1 or 2, **characterised in that** it further comprises the following operation, carried out after the pulling operation:
- introducing a new cable within the guide tube, to replace the recovered cable, by a pressurised hydraulic cable.

4. Cable recovery and replacement system according to one of the claims 1 or 2, **characterised in that** it further comprises the following operations, carried out before the generation of the hydraulic pressurised fluid flow within the guide tube:
- introducing a new cable, that will replace the cable to be recovered and replaced, in a machine for laying cables by hydraulic pressurised fluid, in such a way that a portion of the new cable exits of a length sufficient to arrive from the machine up to the end of the cable to be recovered,
- joining the end of the cable to be laid with the head of the cable to be recovered,
and **in that** it further comprises the following operation, carried out after the operation of generating the hydraulic flow and before the pulling operation:
- waiting until the cable floats within the guide tube,
and **in that** it further comprises the following operation, carried out simultaneously to the pulling operation:
- unwinding the new cable from a recovery reel when the action of the pressurised hydraulic fluid drags the cable within the guide tube, along with the cable to be recovered, and **in that** it further comprises the following operation, carried out after the pulling operation:
- feeding the hydraulic flow, until a length of the new cable exits from the guide tube, sufficient for the joint with the following size.

5. System according to claim 4, **characterised in that** the joint between the end of the cable to be laid and the head of the cable to be recovered is a rigid joint, and the restoring of the joint zone must have at most the same dimensions of the outer surface of the cables.

6. System according one of the preceding claims, **characterised in that** the hydraulic fluid exiting from the guide tube is conveyed outside the joint room between different sizes of the cable, by a provisional support tube sealing coupled with said guide tube.

7. System according one of the preceding claims, **characterised in that** the sealing between the machine generating the hydraulic flow and the guide tube is ensured by a provisional support tube sealing connecting said machine and said guide tube.

8. System according one of the preceding claims 1 - 8, substantially as illustrated and described.
